# EUROPÄISCHE PATENTSCHRIFT

(11) **EP 1 833 132 B1**
(45) Veröffentlichungstag und Bekanntmachung des Hinweises auf die Patenterteilung: **26.09.2012**
(21) Anmeldenummer: 06405109.7
(22) Anmeldetag: 10.03.2006
(51) Int. Cl.: H02B 1/052

(54) **Elektrischer Intallationsbaustein mit einer Schnellbefestigungsvorrichtung**
Electric device with quick fastening means
Dispositif de fixation rapide pour appareillage électrique

(43) Veröffentlichungstag der Anmeldung: 12.09.2007
(73) Patentinhaber: ABB Schweiz AG, 5400 Baden (CH)
(72) Erfinder: von Gunten, Stéphane, 2300 La Chaux-deFond (CH); Holliger, Marco, 8212 Neuhausen (CH); Schalk, Adelbert, 79793 Wutöschingen (DE); Ehrensperger, Fritz, 8460 Marthalen (CH)
(74) Vertreter: ABB Patent Attorneys

(56) Entgegenhaltungen:
- DE-A1- 3 513 762
- DE-U1- 29 612 121
- FR-A- 2 604 325

## Beschreibung

### TECHNISCHES GEBIET

Die vorliegende Erfindung bezieht sich auf einen elektrischen Installationsbaustein nach dem Oberbegriff von Patentanspruch 1. Ein solcher Installationsbaustein wird in Niederspannungsverteilern verwendet, in denen auf einer Montageschiene ein ganzer Verband von Installationsbausteinen angeordnet ist, welche zum Ausführen unterschiedlicher Funktionen bestimmt sind und typischerweise als Schalter, Überspannungsableiter, Einspeiseblock oder Kontaktblock mit Hilfs- und/oder Signalkontakten ausgebildet sein können.

Der Installationsbaustein weist eine Vorrichtung zur lösbaren Schnellbefestigung des Bausteins auf einer profiliert ausgebildeten und längs einer Achse ausgerichteten Montageschiene auf. Die Befestigungsvorrichtung enthält eine in ein Gehäuse des Installationsbausteins eingeformte Führungsbahn und einen in der Führungsbahn gleitend gelagerten und entlang der Führungsbahn zwischen zwei Raststellungen verschiebbaren Schieber. Bei eingebautem Baustein hintergreift eine in Schubrichtung federnde Klemmnase des Schiebers die Montageschiene. Die Klemmnase ist derart ausgebildet, dass der Installationsbaustein in der ersten Raststellung durch Kippen um die Achse auf die Schiene schnappbar oder von der Schiene lösbar ist.

### STAND DER TECHNIK

Ein elektrischer Installationsbaustein der eingangs genannten Art ist beschrieben in DE 44 39 672 A1. Dieser Baustein ist als Leitungsschutzschalter ausgeführt und weist ein im wesentlichen kastenförmig ausgebildetes Gehäuses auf, das mit seiner Unterseite auf einer Montageschiene befestigt ist. Als Befestigungsmittel sind eine hinterschnitten in die Unterseite des Gehäuses eingeformte und eine erste Kante der Montageschiene hintergreifende Flanke vorgesehen sowie ein aus einem Federblech gestanzter Schieber, der in zwei Gehäusenuten an der Unterseite des Gehäuses geführt ist. In einer ersten Rastposition hintergreift der Schieber mit einer federnd ausgebildeten Klemmnase eine zweite Kante der Montageschiene. Die Klemmnase ist so geformt, dass der Baustein in der ersten Rastposition durch Kippen um die erste Kante schnell von der Montageschiene gelöst oder schnell auf die Montageschiene aufgeschnappt werden kann. In der ersten Rastposition hintergreifen zwei Schnapphaken je einen von zwei Vorsprüngen des Gehäuses und verriegeln so den Schieber und damit den Installationsbaustein. Durch Verschieben des Schiebers wird die Verriegelung wieder aufgehoben und wird die zweite Rastposition erreicht, in der der Baustein ohne Kippbewegung von der Montageschiene gelöst ist und entlang der Montageschiene verschoben werden kann.

Ein auf einer Montageschiene befestigbarer Installationsbaustein ist auch aus DE 196 06 216 A1 bekannt. Als Befestigungsmittel ist ein aus Kunststoff gefertigter Schieber mit einem Befestigungsrahmen und zwei im Rahmen gehaltenen Federnocken vorgesehen. Der Rahmen ist in einem als Befestigungsplatte ausgebildeten Teil eines Gehäuses des Bausteins verschiebbar gelagert. Beim Befestigen des Installationsbausteins auf einer Montageschiene wird der Baustein um eine Kante der Montageschiene gekippt. Während des Kippvorgangs gleitet ein auf einer Gegenkante der Montageschiene aufliegender Rücken einer in den Befestigungsrahmen eingeformten Nase und verschiebt den Schieber. Beim Verschieben bauen die in Schrägnuten der Befestigungsplatten gleitenden Federnocken eine entgegen der Schubrichtung wirkende Kraft auf. Sobald die Nase über die Gegenkante greift ist der Kippvorgang beendet und ist dann der Baustein an der Schiene festgesetzt. Zum Lösen des Bausteins ist der Schieber entgegen der von den Federnocken erzeugten Kraft solange zu verschieben bis die Nase die Kante der Montageschiene freigibt. Der Baustein kann dann durch Kippen von der Montageschiene entfernt werden.

Ein weiterer Installationsbaustein ist aus der FR 2 604 325 bekannt.

### DARSTELLUNG DER ERFINDUNG

Der Erfindung, wie sie in den Patentansprüchen angegeben ist, liegt die Aufgabe zugrunde, einen elektrischen Installationsbaustein der eingangs genannten Art zu schaffen, der kostengünstig gefertigt werden kann.

Beim Installationsbaustein nach der Erfindung ist ein in einer Führungsbahn des Installationsbausteins gelagerter und als Kunststofformteil ausgebildeter Schieber vorgesehen, welcher einen Grundkörper und einen vom Grundkörper gehaltenen ersten Federarm aufweist, und ist in die Führungsbahn eine Nut mit einer vom Grund der Nut gebildeten Kulisse eingeformt. Ein freies Ende des ersten Federarms ist auf der Kulisse abgestützt und leitet in einer ersten Raststellung eine in Richtung einer Klemmnase wirkende erste Haltekraft und in einer zweiten Raststellung eine entgegengesetzt wirkende zweite Haltekraft in den Schieber ein.

Dieser Installationsbaustein benötigt neben sowieso vorhandenen Teilen, wie seinem Gehäuse, zusätzlich lediglich ein, etwa durch Spritzguss, kostengünstig herstellbares Kunststofformteil. Er kann daher in wirtschaftlicher Weise gefertigt werden. Zugleich kann er einfach montiert oder demontiert werden. In der ersten Raststellung kann er ohne Entriegelung aus einem Verband von Installationsbausteinen entfernt oder in diesen Verband eingebaut werden. In der zweiten Raststellung kann er längs einer die Bausteine haltenden Montageschiene verschoben werden.

Die für die beiden Raststellungen erforderlichen Haltekräfte werden mit einfachen Mitteln erreicht, wenn die Kulisse einen zum Führungskörper hin ausgerichteten Vorsprung mit zwei gegenläufig zur Führungsrichtung des Schiebers geneigten Flanken aufweist, von denen die erste Flanke das freie Ende des ersten Federarms in der ersten Raststellung und die zweite Flanke das freie Ende des ersten Federarms in der zweiten Raststellung abstützt.

Ist in das freie Ende des ersten Federarms ein in der Nut verschiebbar gelagerter Gleitnocken eingeformt, so kann der Schieber weitgehend verklemmungsfrei zwischen den beiden Raststellungen bewegt werden.

Eine definierte Positionierung in der ersten Raststellung ist mit einfacher Mitteln sichergestellt, wenn in den Grundkörper ein Anschlag eingeformt ist, der in der ersten Raststellung an einer Gehäusekante des Installationsbausteins abgestützt ist.

Ist in den Grundkörper ein Rastnocken eingeformt, der in der zweiten Raststellung an einer in die Führungsbahn eingeformten Kante abgestützt ist, so ist es möglich, den Schieber in der zweiten Raststellung sicher zu positionieren. Dieser Rastnocken weist mit Vorteil geneigte Flanken auf, von denen eine in der zweiten Raststellung an die Kante anschlägt. Die Neigung dieser Flanke ist mit Vorteil so bemessen, dass der Schieber bei der Wirkung einer übermässig grossen Kraft während des Übergangs von der ersten zur zweiten Raststellung nicht beschädigt werden kann, sondern lediglich aus dem Gehäuse gezogen wird.

Der Schieber kann besonders leicht in die Führungsbahn eingesetzt, betätigt oder wieder aus der Führungsbahn entfernt werden, wenn an einem aus dem Gehäuse geführten Ende seines Grundkörpers ein Montagegriff angebracht ist.

Gute Gleiteigenschaften des Schiebers werden mit einem Grundkörper erreicht, in den ein in der Führungsbahn gelagerter Gleitkörper eingeformt ist. Dieser Gleitkörper nimmt zugleich die beim Ein- und Ausbau des Installationsbausteins in der ersten Raststellung auftretenden grossen Querkräfte am Schieber sicher auf. Die Gleiteigenschaften werden zusätzlich verbessert, wenn in den Gleitkörper ein in der Nut geführter Gleitnocken eingeformt ist. Wird in diesen Gleitkörper die Klemmnase eingeformt, so zeichnet sich der Schieber durch einen besonders kompakten Aufbau aus.

Besonders gute Gleiteigenschaften und eine gleichmässige Belastung des Schiebers werden mit einem Grundkörper erzielt, der einen spiegelsymmetrisch zum ersten Federarm liegenden zweiten Federarm hält. Der Schieber ist dann im allgemeinen nach Art einer Platte ausgebildet.

### KURZE BESCHREIBUNG DER FIGUREN

Anhand von Zeichnungen wird nachfolgend ein Ausführungsbeispiel der Erfindung näher erläutert. Hierbei zeigt:
- Fig.1: eine in Richtung einer Montageschiene geführte Seitenansicht eines in einer ersten Rastposition auf der Montageschiene festgesetzten Installationsbausteins nach der Erfindung mit einem zweiteilig ausgeführten Bausteingehäuse, dessen dem Betrachter zugewandtes Gehäuseteil entfernt wurde,
- Fig.2: eine Aufsicht in Pfeilrichtung auf einen längs II-II geführten Schnitt durch den Installationsbaustein gemäss Fig.1,
- Fig.3: eine Aufsicht gemäss Fig.2 beim schnellen Lösen des Bausteins von der Montageschiene durch einen Kippvorgang,
- Fig.4: eine Aufsicht gemäss Fig.2 auf den nun in der zweiten Rastposition befindlichen Installationsbaustein, und
- Fig.5: eine Seitenansicht gemäss Fig.1 des nun in der zweiten Rastposition befindlichen Installationsbausteins nach der Erfindung.

### WEG ZUR AUSFÜHRUNG DER ERFINDUNG

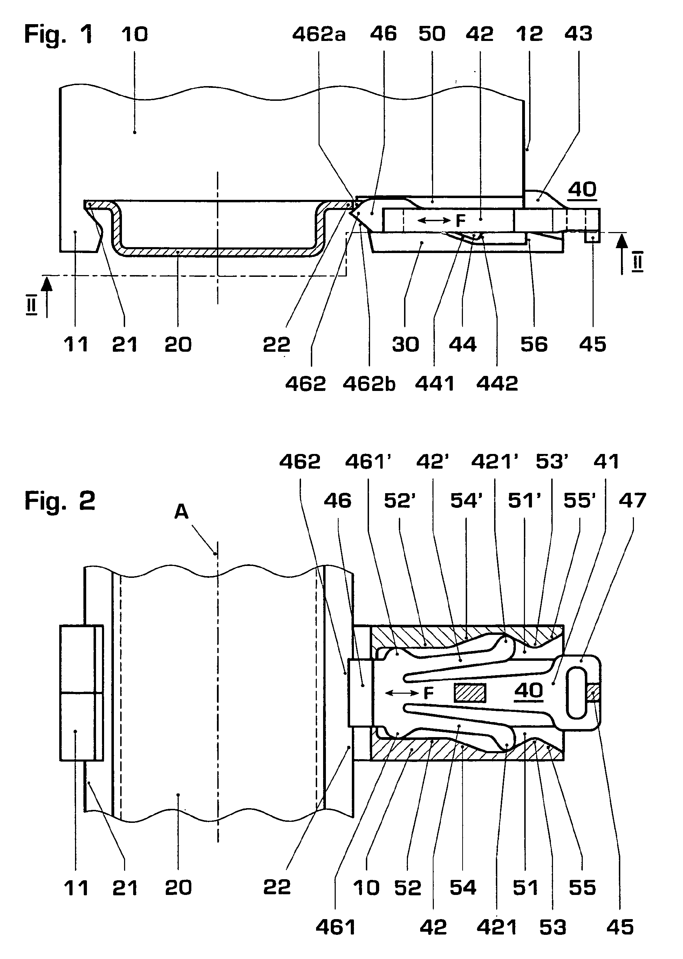

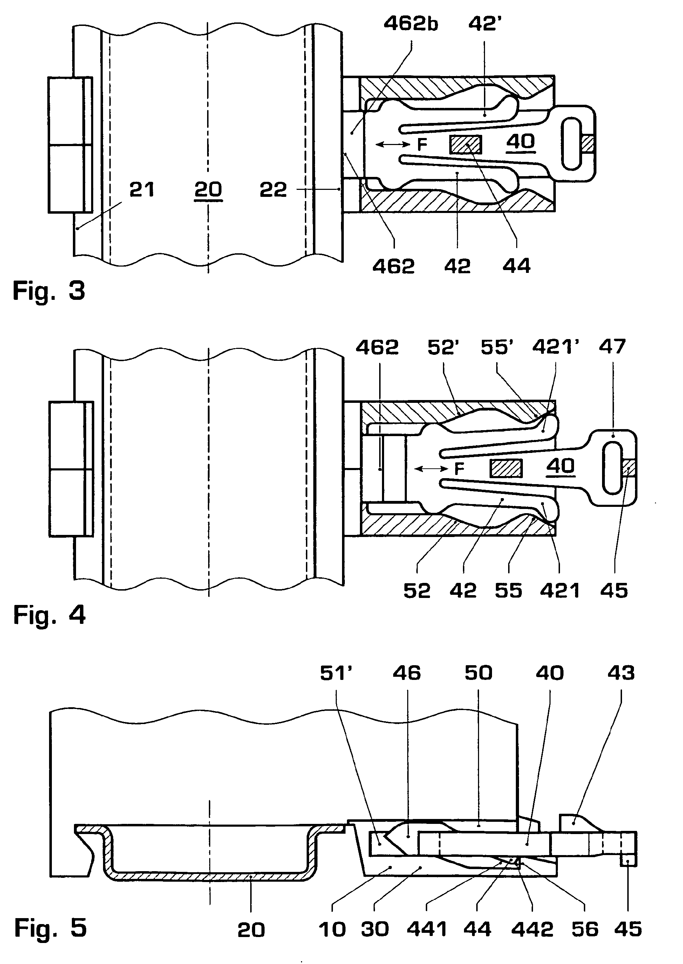

In allen Figuren beziehen sich gleiche Bezugszeichen auf gleichwirkende Teile. In den Figuren 1 bis 5 ist ein beispielsweise als Schutzschalter ausgebildeter Installationsbaustein mit einem aus Kunststoff gefertigten, zweiteiligen Gehäuse 10 dargestellt, dessen dem Betrachter zugewandtes Gehäuseteil in den Figuren 1 und 5 entfernt wurde. In der in den Figuren 1 und 2 dargestellten Position befindet sich der Installationsbaustein in einer ersten Rastposition und ist auf einer längs einer Achse A ausgerichteten Montageschiene 20 festgesetzt. Ersichtlich hintergreift das Gehäuse 10 dann mit einem Gehäuseansatz 11 eine Kante 21 der ein Hutprofil aufweisenden Montageschiene und eine Klemmnase 462 einer Schnellbefestigungsvorrichtung 30 eine Gegenkante 22 der Montageschiene 20.

Die Schnellbefestigungsvorrichtung 30 weist einen als Kunststofformteil ausgebildeten Schieber 40 sowie eine ins Gehäuse 10 eingeformte Führungsbahn 50 auf. Der Schieber 40 ist entlang der Führungsbahn 50 zwischen der ersten und einer aus den Figuren 4 und 5 ersichtlichen zweiten Rastposition senkrecht zur Achse A in einer durch einen Doppelpfeil angezeigten Richtung F verschiebbar. Er ist nach Art einer Platte ausgebildet und besteht, wie in Fig.2 dargestellt, aus einem Grundkörper 41 und zwei hinsichtlich der Schubrichtung F symmetrisch zueinander liegenden, an den Grundkörper 41 angeformten Federarmen 42, 42'. Gemäss Fig.1 sind in den Grundkörper ein Anschlag 43, ein Rastnocken 44, ein ausserhalb des Gehäuses angeordneter Montagegriff 45 und ein zur Aufnahme vergleichsweise grosser Kräfte bestimmter Gleitkörper 46 eingeformt. Gemäss Fig.2 sind in die Führungsbahn zwei Nuten 51, 51' eingeformt. Der Grund jeder Nut bildet eine Kulisse 52 bzw. 52', auf der das als Gleitnocken 421 bzw. 421' ausgebildete freie Ende des Federarms 42 bzw. 42' mit einer durch elastische Verformung des Federarms erzeugten Vorspannkraft abgestützt ist. In den Gleitkörper 46 sind eine Klemmnase 462 und zwei jeweils in einer beider Nuten 51, 51' geführte Gleitnocken 461, 461' eingeformt. Die beiden Federarme 42, 42' sind an einer von der Klemmnase 462 abgewandten Seite am Gleitkörper 46 gehalten und in Führungsrichtung F des Schiebers 40 ausgerichtet. Da der Gleitkörper 46 grosse Kräfte aufnehmen kann, ist er mechanisch besonders stabil ausgebildet. Die beiden Federarme 42, 42' sind daher besonders fest mit dem Grundkörper 41 verbunden. Zwischen den freien Enden der Federarme 42, 42' und dem Grundkörper 41 können daher grosse Kräfte wirken, ohne dass die Federarme unzulässig hoch belastet sind.

Befindet sich die Schnellbefestigungsvorrichtung in der aus den Figuren 1 und 2 ersichtlichen ersten Raststellung, so stützen sich die beiden freien Enden der Federarme 42, 42' bzw. die deren freien Enden bildenden Gleitnocken 421, 421' auf den zur Achse A hin geneigten Flanken 54, 54' der Kulissen 52, 52' ab. Es wird so eine Kraft erzeugt, die den Schieber in Richtung der Achse A vorspannt und ihn so weit nach links zur Achse A hin verschiebt, dass die Klemmnase 462 die Kante 22 hintergreift. Der Anschlag 43 nimmt diese Kraft beim Auftreffen auf Fläche 12 des Gehäuses 10 auf und begrenzt so die Bewegung des Schiebers 40 in definierter Weise. Senkrecht zur Führungsrichtung F, insbesondere zur Achse A, auf den Schieber 40 wirkende Kräfte werden von dem in der Führungsbahn abgestützten Gleitkörper 46 sowie den beiden Gleitnocken 461 und 461' aufgenommen.

Soll der Installationsbaustein von der Montageschiene gelöst werden, so wird der Installationsbaustein im Gegenuhrzeigersinn um die Kante 21 gekippt. Die Klemmnase 462 weist eine an der Kante 22 anliegende Flanke 462a mit einer Neigung auf, die beim Kippen infolge Keilwirkung den Schieber 40 entgegen der Vorspannkraft der beiden Federarme 42, 42' solange nach rechts verschiebt bis die Nase von der Kante 22 freikommt (Fig.3) und der Installationsbaustein von der Montageschiene 20 gelöst ist. Der Installationsbaustein kann dann leicht aus einem auf der Montageschiene befestigten Verband von Installationsbausteinen entfernt werden. Der Schieber befindet sich nach dem Ausbau des Bausteins wieder in der aus den Figuren 1 und 2 ersichtlichen ersten Rastposition.

Beim Einbau in den Verband wird der in der ersten Rastposition befindliche Installationsbaustein am Gehäuseansatz 11 an die Kante 21 angesetzt und um diese Kante im Uhrzeigersinn gekippt bis eine Flanke 462b der Nase 462 an die Kante 22 schlägt. Auch diese Flanke weist eine Neigung auf, die beim weiteren Kippen den Schieber 40 entgegen der Vorspannkraft der beiden Federarme 42, 42' solange nach rechts verschiebt bis die Nase von der Kante 22 freikommt (Fig.3) und der Schieber 40 dann solange nach links verschoben wird bis der Anschlag 43 an der Fläche 12 anliegt und wieder die aus den Figuren 1 und 2 Position erreicht ist, in der der Installationsbaustein an der Montageschiene 20 festgesetzt ist.

Soll der Installationsbaustein in Richtung der Achse A, also nach oben oder nach unten, auf der Montageschiene 20 verschoben werden, so wird die Schnellbefestigungsvorrichtung 30 in eine aus den Figuren 4 und 5 ersichtliche zweite Rastposition gebracht. Hierbei wird der Schieber 40 mit Hilfe des Montagegriffs 45 oder gegebenenfalls eines Werkzeugs, das in ein ausserhalb des Gehäuses angeordnetes Auge 47 zunächst gegen die Vorspannkraft der Federarme 42, 42' solange nach rechts in Richtung F verschoben bis deren freien Enden bzw. die Gleitnocken 421, 421' sich auf den von der Achse A weg geneigten Flanken 55, 55' der Kulissen 52, 52' abstützen. Es bildet sich dann eine Kraft, die den Schieber 40 in einer von der Achse A abgewandten Richtung vorspannt und ihn so weit nach rechts von der Achse A wegschiebt bis der Rastnocken 44 - wie in Fig.5 dargestellt ist - auf die Kante 56 aufläuft und so die Bewegung des Schiebers 40 nach rechts begrenzt. Ersichtlich weist der Rastnocken 44 zwei in Schubrichtung gegeneinander geneigte Flanken 441 und 442 auf. Wird beim Verschieben von der ersten in die zweite Rastposition eine vergleichsweise grosse Kraft auf den Schieber 40 ausgeübt, so gleitet oberhalb eines vorbestimmten Grenzwerts der Kraft die relativ steil ausgebildete Flanke 442 über die Kante 56. Der Schieber wird dann auch bei Anwendung einer übermässig grossen Kraft, ohne beschädigt zu werden, aus dem Gehäuse 10 herausgezogen. Die weniger steil ausgeführt Flanke 441 erleichtert danach das Einschieben des Schiebers 40 in die Führungsbahn 50.

Da der Schieber 40 zwei symmetrisch zur Verschiebungsrichtung F angeordnete Federarme 42, 42' aufweist, ist er beim Verschieben und in den beiden Raststellungen mit Kräften belastet, die überwiegend in Verschiebungsrichtung F wirken. Da gegebenenfalls auch eine im Verschiebungsrichtung wirkende Kraftkomponente ausreicht, um das Verschieben und die Raststellungen zu ermöglichen, kann in einer besonders einfachen Ausführungsform des Installationsbausteins der Schieber lediglich einen Federarm aufweisen und in die Führungsbahn lediglich eine Nut mit einer diesen Federarm steuernden Kulisse eingeformt sein.

### BEZUGSZEICHENLISTE

- 10: Gehäuse
- 11: Gehäuseansatz
- 12: Gehäusefläche
- 20: Montageschiene
- 21, 22: Kanten der Montageschiene
- 30: Schnellbefestigungsvorrichtung
- 40: Schieber
- 41: Grundkörper
- 42, 42': Federarm
- 421, 421': Gleitnocken
- 43: Anschlag
- 44: Rastnocken
- 441, 442: Flanken
- 45: Montagegriff
- 46: Gleitkörper
- 461, 461': Gleitnocken
- 462: Klemmnase
- 47: Auge
- 50: Führungsbahn
- 51, 51': Nuten
- 52, 52': Kulissen
- 53: Ausbuchtung
- 54, 54', 55, 55': Flanken
- 56: Kante
- A: Achse
- F: Schubrichtung

## Patentansprüche

1. Elektrischer Installationsbaustein mit einer Vorrichtung (30) zur lösbaren Schnellbefestigung des Bausteins auf einer profiliert ausgebildeten Montageschiene (20) mit einem Gehäuse (10), in das eine Führungsbahn (50) eingeformt ist, und mit einem in der Führungsbahn (50) gleitend gelagerten und entlang der Führungsbahn zwischen zwei Raststellungen verschiebbaren Schieber (40), der bei eingebautem Baustein in der ersten Raststellung die Montageschiene (20) mit einer Klemmnase (462) hintergreift, welche derart ausgebildet ist, dass der Installationsbaustein in der ersten Raststellung durch Kippen um eine Kante (21) der Montageschiene (20) auf die Schiene schnappbar oder von der Schiene lösbar ist, wobei der Schieber (40) als Kunststofformteil ausgebildet ist und einen Grundkörper (41) und einen am den Grundkörper gehaltenen ersten Federarm (42) aufweist, dass in die Führungsbahn (50) eine Nut (51) mit einer vom Grund der Nut gebildeten Kulisse (52) eingeformt ist, und dass ein freies Ende des ersten Federarms (42) auf der Kulisse (52) abgestützt ist und in der ersten Raststellung eine in Richtung der Klemmnase (462) wirkende erste Haltekraft und in der zweiten Raststellung eine entgegengesetzt wirkende zweite Haltekraft in den Schieber (40) einleitet,
dass in den Grundkörper (41) ein in der Führungsbahn (50) gelagerter Gleitkörper (46) eingeformt ist,
dass die Klemmnase (462) in den Gleitkörper (46) eingeformt ist,
und dass der erste Federarm (42) in Führungsrichtung (F) des Schiebers ausgerichtet ist,
**dadurch gekennzeichnet, dass** der erste Federarm (42) an einer von der Klemmnase (462) abgewandten Seite am Gleitkörper (46) gehalten ist.

2. Baustein nach Anspruch 1, **dadurch gekennzeichnet, dass** die Kulisse (52) eine Ausbuchtung (53) mit zwei gegenläufig zur Führungsrichtung (F) des Schiebers (40) geneigten Flanken (54, 55) aufweist, von denen die erste Flanke (54) das freie Ende des ersten Federarms (42) in der ersten Raststellung und die zweite Flanke (55) das freie Ende des ersten Federarms (42) in der zweiten Raststellung abstützt.

3. Baustein nach einem der Ansprüche 1 oder 2, **dadurch gekennzeichnet, dass** das freie Ende des ersten Federarms (42) einen in der Nut verschiebbar gelagerten Gleitnocken (421) aufweist.

4. Baustein nach einem der Ansprüche 1 bis 3, **dadurch gekennzeichnet, dass** in den Grundkörper (41) ein Anschlag (43) eingeformt ist, der in der ersten Raststellung an einer Gehäusefläche (12) des Installationsbausteins abgestützt ist.

5. Baustein nach einem der Ansprüche 1 bis 4, **dadurch gekennzeichnet, dass** in den Grundkörper (41) ein Rastnocken (44) eingeformt ist, der in der zweiten Raststellung an einer in die Führungsbahn (50) eingeformten Kante (56) abgestützt ist.

6. Baustein nach Anspruch 5, **dadurch gekennzeichnet, dass** der Rastnocken (44) zwei gegeneinander geneigte Flanken (441, 442) aufweist, von denen eine (442) in der zweiten Raststellung an die Kante (56) anschlägt.

7. Baustein nach einem der Ansprüche 1 bis 6, **dadurch gekennzeichnet, dass** in ein aus dem Gehäuse (10) geführten Ende des Grundkörpers (41) ein Montagegriff (45) eingeformt ist.

8. Baustein nach einem der Ansprüche 1 bis 7, **dadurch gekennzeichnet, dass** in den Gleitkörper (46) ein in der Nut (51) geführter Gleitnocken (461) eingeformt ist.

9. Baustein nach einem der Ansprüche 1 bis 8, **dadurch gekennzeichnet, dass** am Grundkörper (41) ein spiegelsymmetrisch zum ersten Federarm (42) liegender zweiter Federarm (42') gehalten ist.

10. Baustein nach Anspruch 9, **dadurch gekennzeichnet, dass** der Schieber (40) nach Art einer Platte ausgebildet ist.

11. Schieber (40) für einen Installationsbaustein nach einem der Ansprüche 1 bis 10.

## Claims

1. Electrical installation module having an apparatus (30) for quickly and detachably fastening the module on a profiled mounting rail (20) having a housing (10), in which a guide track (50) is integrally formed, and having a slide (40), which is mounted in a sliding manner in the guide track (50) and can be moved along the guide track between two latching positions and engages behind the mounting rail (20) by way of a clamping lug (462) in the first latching position when the module is installed, which clamping lug (462) is formed in such a way that the installation module can be snapped onto the rail or released from the rail in the first latching position by tilting about an edge (21) of the mounting rail (20), with the slide (40) being in the form of a shaped plastic part and having a base body (41) and a first spring arm (42) which is held on the base body, with a groove (51) with a slotted guide (52) which is formed by the base of the groove being integrally formed in the guide track (50), and with a free end of the first spring arm (42) being supported on the slotted guide (52) and introducing a first holding force, which acts in the direction of the clamping lug (462) into the slide (40) in the first latching position, and introducing a second holding force, which acts in the opposite direction into the slide (40) in the second latching position, with a sliding body (46) which is mounted in the guide track (50) being integrally formed in the base body (41), with the clamping lug (462) being integrally formed in the sliding body (46), and with the first spring arm (42) being oriented in the guide direction (F) of the slide, **characterized in that** the first spring arm (42) is held on the base body (46) on a side which is averted from the clamping lug (462).

2. Module according to Claim 1, **characterized in that** the slotted guide (52) has a convexity (53) with two flanks (54, 55) which are inclined in the opposite direction to the guide direction (F) of the slide (40) and of which the first flank (54) supports the free end of the first spring arm (42) in the first latching position, and the second flank (55) supports the free end of the first spring arm (42) in the second latching position.

3. Module according to either of Claims 1 and 2, **characterized in that** the free end of the first spring arm (42) has a sliding cam (421) which is movably mounted in the groove.

4. Module according to one of Claims 1 to 3, **characterized in that** a stop (43) is integrally formed in the base body (41), the said stop (43) being supported on a housing surface (12) of the installation module in the first latching position.

5. Module according to one of Claims 1 to 4, **characterized in that** a latching cam (44) is integrally formed in the base body (41), the said latching cam (44) being supported on an edge (56), which is integrally formed in the guide track (50), in the second latching position.

6. Module according to Claim 5, **characterized in that** the latching cam (44) has two flanks (441, 442) which are inclined relative to one another and of which one (442) stops against the edge (56) in the second latching position.

7. Module according to one of Claims 1 to 6, **characterized in that** a mounting grip (45) is integrally formed in an end of the base body (41) which is guided out of the housing (10).

8. Module according to one of Claims 1 to 7, **characterized in that** a sliding cam (461), which is guided in the groove (51), is integrally formed in the sliding body (46).

9. Module according to one of Claims 1 to 8, **characterized in that** a second spring arm (42'), which is positioned with mirror-image symmetry to the first spring arm (42), is held on the base body (41).

10. Module according to Claim 9, **characterized in that** the slide (40) is formed in the manner of a plate.

11. Slide (40) for an installation module according to one of Claims 1 to 10.

## Revendications

1. Composant d'installation électrique comprenant un dispositif (30) pour la fixation rapide amovible du composant sur un rail de montage (20) de configuration profilée, comprenant un boîtier (10) dans lequel est façonnée une bande de guidage (50) et comprenant un curseur (40) logé de manière coulissante dans la bande de guidage (50) et pouvant coulisser le long de la bande de guidage entre deux positions d'enclenchement, lequel vient en prise par l'arrière sur le rail de montage (20) lorsque le composant est monté dans la première position d'enclenchement avec un tenon de blocage (462), qui est configuré de telle sorte que le composant d'installation, dans la première position d'enclenchement, peut être enclipsé sur le rail ou détaché du rail par basculement autour d'un bord (21) du rail de montage (20), le curseur (40) étant réalisé sous la forme d'une pièce moulée en matière plastique et présentant un corps de base (41) ainsi qu'un premier bras de ressort (42) maintenu sur le corps de base, une rainure (51) avec une coulisse (52) formée par la base de la rainure étant façonnée dans la bande de guidage (50), et une extrémité libre du premier bras de ressort (42) étant soutenue sur la coulisse (52) et, dans la première position d'enclenchement, induisant une première force de maintien qui agit en direction du tenon de blocage (462) et, dans la deuxième position d'enclenchement, induisant dans le curseur (40) une deuxième force de maintien qui agit en sens inverse, qu'un corps de glissement (46) logé dans la bande de guidage (50) est façonné dans le corps de base (41), que le tenon de blocage (462) est façonné dans le corps de glissement (46),
et que le premier bras de ressort (42) est orienté dans le sens de guidage (F) du curseur,
**caractérisé en ce que** le premier bras de ressort (42) est maintenu sur le corps de glissement (46) sur un côté opposé au tenon de blocage (462).

2. Composant selon la revendication 1, **caractérisé en ce que** la coulisse (52) présente une grosseur (53) comportant deux flancs (54, 55) inclinés en sens inverse du sens de guidage (F) du curseur (40), dont le premier flanc (54) soutient l'extrémité libre du premier bras de ressort (42) dans la première position d'enclenchement et le deuxième flanc (55) l'extrémité libre du premier bras de ressort (42) dans la deuxième position d'enclenchement.

3. Composant selon l'une des revendications 1 ou 2, **caractérisé en ce que** l'extrémité libre du premier bras de ressort (42) présente une came de glissement (421) logée de manière coulissante dans la rainure.

4. Composant selon l'une des revendications 1 à 3, **caractérisé en ce qu'**une butée (43) est façonnée dans le corps de base (41), laquelle, dans la première position d'enclenchement, s'appuie sur une surface de boîtier (12) du composant d'installation.

5. Composant selon l'une des revendications 1 à 4, **caractérisé en ce qu'**une came d'enclenchement (44) est façonnée dans le corps de base (41), laquelle, dans la deuxième position d'enclenchement, s'appuie sur un bord (56) façonné dans la bande de guidage (50).

6. Composant selon la revendication 5, **caractérisé en ce que** la came d'enclenchement (44) présente deux flancs (441, 442) inclinés en sens inverse, dont l'un (442) vient buter contre le bord (56) dans la deuxième position d'enclenchement.

7. Composant selon l'une des revendications 1 à 6, **caractérisé en ce qu'**une poignée de montage (45) est façonnée dans une extrémité du corps de base (41) amenée hors du boîtier (10).

8. Composant selon l'une des revendications 1 à 7, **caractérisé en ce qu'**une came de glissement (461) guidée dans la rainure (51) est façonnée dans le corps de glissement (46).

9. Composant selon l'une des revendications 1 à 8, **caractérisé en ce qu'**un deuxième bras de ressort (42'), disposé selon une symétrie en miroir par rapport au premier bras de ressort (42), est maintenu sur le corps de base (41).

10. Composant selon la revendication 9, **caractérisé en ce que** le curseur (40) est réalisé sous la forme d'une plaque.

11. Curseur (40) pour un composant d'installation selon l'une des revendications 1 à 10.
